# EUROPEAN PATENT APPLICATION

(11) **EP 4 793 721 A1**
(43) Date of publication of application: **19.08.2026**
(21) Application number: 25157480.2
(22) Date of filing: 12.02.2025
(51) Int. Cl.: G05B 13/02, G05B 13/04

(54) **COMPUTER IMPLEMENTED METHOD AND CONTROL SYSTEM TO SET CONTROL PARAMETERS**

(71) Applicant: Terra Quantum AG, 9000 St. Gallen (CH)
(72) Inventor: Sagingalieva, Asel, 9000 St. Gallen (CH); Melnikov, Alexey, 9000 St. Gallen (CH)
(74) Representative: Lucke, Andreas

(57) **Abstract**

A computer-implemented method for setting control parameters to stabilize a target observable towards a setpoint, comprising obtaining an oracle for predicting the target observable at a targeted future point in time given a scheduled set of control parameters, receiving, by a controller machine learning model, a slice of previous time-series data of the target observable and control parameters, and predicting, by the controller machine learning model, the scheduled set of control parameters to be set prior to the targeted future point in time given the slice of previous time-series data, determining, by the oracle, the target observable for the scheduled set of control parameters, and updating weights of the controller machine learning model based the difference between the setpoint and the target observable determined by the oracle, and setting the control parameters based on the scheduled set of control parameters.

## Description

### FIELD OF THE DISCLOSURE

The present disclosure relates to a system and a method for setting control parameters to stabilize a target observable towards a setpoint. Specifically, the present disclosure relates to a control system and computer-implemented method that utilize a controller machine learning model for predicting and adjusting control parameters based on time-series data.

### BACKGROUND

In the field of control systems, it is common to utilize various methods and algorithms to maintain a target observable, e.g. a measurable variable characterizing a state of an industrial process, at a desired setpoint. Known systems typically involve the use of classical control techniques such as Proportional-Integral-Derivative (PID) controllers, which adjust control parameters based on the error between the setpoint and the current value of the target observable. These methods have been widely adopted due to their simplicity and effectiveness in many applications. However, they often require manual tuning and may not perform well in complex, dynamic environments where the relationships between variables are non-linear and time-dependent.

Advanced control strategies, such as Model Predictive Control (MPC), have been developed to address some of the limitations of traditional methods. MPC involves creating a model of the system to predict future behavior and optimize control actions over a specified time horizon. While MPC can handle multi-variable control problems and constraints more effectively than PID controllers, it still relies heavily on accurate system models and can be computationally intensive. Additionally, the performance of MPC can degrade if the model does not accurately capture the system dynamics or if there are significant disturbances.

Machine learning approaches have also been explored for control applications, lever-aging the ability of machine learning models to learn complex patterns from data. Despite these advances, integrating machine learning models into control systems poses challenges, including the need for large amounts of training data, the risk of overfitting, and the difficulty of ensuring stability and robustness in real-time applications.

### SUMMARY OF THE DISCLOSURE

There remains a need for improved methods that can effectively stabilize target observ-ables towards setpoints in dynamic and complex environments while minimizing computational overhead and ensuring robustness. It is therefore a technical problem to provide a method and system for setting control parameters that at least partially overcomes the disadvantages of known systems.

The present disclosure provides a computer-implemented method and control system as set out in the appended independent claims. Examples thereof are detailed in the dependent claims.

A first aspect provides a computer-implemented method for setting control parameters to stabilize a target observable towards a setpoint. The method comprises obtaining an oracle for predicting a value of the target observable at a targeted future point in time given previous time-series data on the target observable and the control parameters and a scheduled set of control parameters to be set prior to the targeted future point in time, and preparing a controller machine learning model, the controller machine learning model comprising inputs for previous time-series data on the target observable and the control parameters and outputs for the scheduled set of control parameters. The method further comprises receiving, by the controller machine learning model, a slice of previous time-series data of the target observable and control parameters; and predicting, by the controller machine learning model, the scheduled set of control parameters to be set prior to the targeted future point in time given the slice of previous time-series data, and training the controller machine learning model, by determining, by the oracle, the value of the target observable for the scheduled set of control parameters predicted by the controller machine learning model, and updating weights of the controller machine learning model based on a cost function attributing a cost to the scheduled set of control parameters predicted by the controller machine learning model in view of the difference between the setpoint and the value of the target observable determined by the oracle. The method further comprises setting the control parameters based on the scheduled set of control parameters to stabilize the target observable towards the setpoint.

Control parameters refer to the variables that can be adjusted to influence the target observable. The scheduled set of control parameters may refer to multiple different values for the same control parameter, which may be associated with different scheduled times, and may include different control parameters, which influence the target observable based on a different relationship between the respective control parameter and the target observable. For example, the set of control parameters may include different values of a control parameter to be set at different points in time spaced from each other by a temporal spacing. Control parameters may be set by sending a control command to control hardware, which may change a variable of a controlled process, such as a current, a rotation speed, an opening angle, or any other controllable variable. In some examples, multiple variables are set in parallel based on corresponding control parameters of the scheduled set of control parameters.

The target observable is a parameter that needs to be stabilized, and for which an indicator can be observed to quantify a current state of the parameter. For example, in a temperature control process, the control variable may be a heater current, and the target observable may be a temperature. The target observable may be obtainable or derivable from a sensor reading, such as a sensing current indicative of a temperature. The setpoint may be a currently desired value or range for the target observable. Continuing with the example, the setpoint may be a desired temperature setting, which should be held stable under optimal control.

The method comprises obtaining an oracle, which is a predictive model capable of forecasting the future value of the target observable at the targeted future point in time. This prediction is based on historical time-series data of the target observable and control parameters, as well as a scheduled set of control parameters that are intended to be set before the future point in time. Time-series data may be a sequence of data points collected or recorded at successive points in time, typically at uniform intervals. The oracle can predict how the target observable will respond if the scheduled set of control parameters are applied in view of the previous evolution. The oracle may be a simulation of the industrial process or may be based on an empirical relationship between the scheduled set of control parameters and the target observable.

In some examples, the oracle comprises an oracle machine learning model trained to predict the future value of the target observable at the targeted future point in time, when provided with the scheduled set of control parameters and historical data on the target observable, the control parameters, and optionally environmental parameters, as an input to the oracle. The oracle machine learning model may by trained on historical data available for the to-be-controlled industrial process, e.g. with control parameters set according to a previous (different) feedback algorithm or randomly. In some examples, the method comprises training the oracle machine learning model based on historical data, which may be performed offline based on times series data of previously set/measured values of the control parameters and the target observable.

Thus the "oracle" may be a predictive model that forecasts the value of the target observable at a future point in time. The historical data may include both controlled parameters, which can be adjusted by the control system, and uncontrolled parameters, which are external factors that cannot be manipulated. In some examples, the oracle may also be retrained based on recent historical data, e.g. in parallel to the controller machine learning model. The historical data may be time-series data and may be similarly structured as the previous time-series data used by the controller machine learning model to predict the scheduled set of control parameters, e.g. with the same temporal spacing of data points.

The "machine learning model" refers to a computational model that uses algorithms to learn patterns from data and make predictions provided new data. In this implementation, the machine learning model is specifically trained to predict the target observable's value based on historical data and future control parameters. Examples of machine learning models include neural networks, decision trees, and support vector machines. The oracle machine learning model may comprise or be a recurrent neural network, such as an LSTM network. An LSTM neural network is a type of recurrent neural network (RNN) that is capable of learning long-term dependencies in time-series data. LSTM stands for Long Short-Term Memory, and can be well-suited for tasks where the model needs to remember information over extended periods.

The controller machine learning model may implement an algorithm that predicts the control parameters to stabilize the target observable towards the setpoint. The controller machine learning model is designed to receive inputs consisting of previous time-series data on the target observable and previous control parameters. The model's outputs are the scheduled set of control parameters. Accordingly, the controller machine learning model receives a slice of previous time-series data of the target observable and control parameters, and based on this data, it can predict the scheduled set of control parameters to be set before the targeted future point in time. Thus, the controller model may be implemented as a linear regression model, a fully-connected neural network with non-linear activation function, or any recurrent neural network (RNN), capable of capturing short-term temporal dependencies.

The slice of previous time-series data of the target observable and control parameters may correspond to a limited history window preceding the current point in time including data points for the target observable and a control parameter at different discretized points in time, which may be uniformly spaced. The slice of previous time-series data of the target observable and control parameters may include data points for a fixed number of points in time preceding the current point in time, such as data points for the most recent 20 points in time, spaced by a temporal spacing, also referred to as a time step.

The training of the controller machine learning model involves the oracle determining the value of the target observable for the predicted scheduled set of control parameters. The controller machine learning model's weights are updated based on a cost function, which assigns a cost to the predicted scheduled set of control parameters. This cost can be evaluated in view of the difference between the setpoint and the value of the target observable as determined by the oracle. The weights in the context of machine learning refer to adjustable machine learning parameters affecting a processing of the input towards the output within the model that are adjusted during training to minimize an error of the output in view of the cost function.

The cost function may generally quantify a quality of the predicted scheduled set of control parameters by the controller machine learning model and the associated predicted target observable value at the targeted future point in time in view of the setpoint, which may e.g. be implemented by a function, such as a mean squared/absolute error function, of the setpoint and the predicted value of the target observable. The skilled person will appreciate that the cost function may include further terms specifying further constraints to guide a training process of the controller machine learning model and that the mean squared error function is merely an example. The cost function may form a bridge between the oracle and the controller machine learning model, wherein a system knowledge obtained from historical data by the oracle may drive rapid convergence of the controller machine learning model towards stabilization of the target observable.

In most cases, a system latency determining a latency of the target observable with respect to changes of the control parameters is significantly longer than a latency of implementing a change of the control setting. Optimal control of the target observable may therefore require time-resolved control of the control parameters up to the targeted future point in time. Thus, the scheduled set of control parameters should comprise a plurality of control parameters valid for different points in time from the current point in time to the targeted future point in time, and the prediction of the target observable at the targeted future point in time may be made by the oracle based on the plurality of control parameters scheduled for the different points in time.

The output dimension of the controller machine learning model may match the input of the oracle, i.e. the scheduled set of control parameters predicted by the controller machine learning model may comprise or correspond to an input scheduled set of control parameters of the oracle for predicting the target observable at the targeted future point in time.

In some examples, the cost function also considers the difference between the setpoint and predicted values of the target observable for time steps leading up to the future point in time, which may also be predicted by the oracle. The controller machine learning model and the oracle may be combined in a machine learning framework, which allows to train one model (e.g the controller machine learning model) on the basis of another (oracle). In other examples, the cost function does not consider the difference between the setpoint and predicted values of the target observable for time steps leading up to the target future point in time. It is noted that one of the advantages of the proposed framework is that even a comparatively small controller machine learning model (i.e. with a comparatively small number of machine learning parameters/weights) is capable of fast and efficient optimization of the control parameter(s) due to its combination with the oracle in training.

Finally, the control parameters are set based on the scheduled set of control parameters, with the goal of stabilizing the target observable towards the setpoint.

The method may allow combining real-time data with historical data during the optimization process. For example, the method may use a single forward and backward pass for training of the controller machine learning model during real-time stabilization, while offering flexibility to retrain or fix the optimizer as needed. This approach may be beneficial for stabilization of physical processes, such as maintaining stable steam mass flow in a power plant or controlling room temperature, which may be subject to uncontrolled (e.g. hidden) variables. At the same time, previous knowledge on a relationship between the control parameters and the target observable may be used to implement the oracle, even if a previous control scheme was different.

In some examples, the oracle predicts the value of the target observable also based on previous time-series data on a set of environmental parameters, and the time-series data on the set of environmental parameters is provided to the controller machine learning model as an additional input, the environmental parameters being uncontrolled parameters.

Environmental parameters are parameters that are generally not controlled by the system but may influence the target observable. These parameters are also referred to as uncontrolled parameters. Examples of environmental parameters may include external temperature, humidity, or other ambient conditions that could affect the stability of the target observable, but may not be actively controlled to stabilize the target observable, or only controlled by an independent control process, such as a general temperature control of an industrial complex.

The time-series data on the set of environmental parameters may also be provided to the controller machine learning model as an additional input. Thus, the controller machine learning model may receive not only the previous time-series data on the target observable and the control parameters but also the time-series data on the environmental parameters.

For instance, in a room temperature control system, environmental parameters such as outside temperature and humidity could be included as additional inputs. The oracle would then predict the future room temperature based on historical data of the room temperature, heater settings (control parameters), and the external temperature and humidity. The controller machine learning model would use this data to determine the optimal heater settings to be set up to a targeted future point in time, at which the room temperature should be stabilized, to maintain a desired room temperature.

In some examples, the slice of previous time-series data of the target observable and control parameters comprises a sequence of previous data points spaced in time up to a history window t_{history} and/or the previous time-series data is divided into a plurality of points in time.

The slice of previous time-series data may comprise a sequence of previous data points spaced in time up to a history window t_{history} in the past with respect to a current point in time. The history window may represent the period of past data considered for analysis. For example, in a room temperature control scenario, the history window could be the past 24 hours of temperature readings, which may be part of a larger set of historical data. In some examples, the data points are continuously provided to a recurrent neural network for maintaining knowledge of previous time-series data over an effective history window defined by a rate at which prior information is "forgotten".

The previous time-series data may be divided into a plurality of points in time, where each point corresponds to a time interval. The data may be sampled at or averaged over regular intervals, creating discrete time points for analysis. The time intervals may be regularly spaced according to a constant or average time step Δt. For instance, if the time step Δt is set to 10 minutes, data points may be recorded approximately every 10 minutes, or may indicate a (weighted) average value within a 10 minute interval associated with the data point.

In some examples, each of the points in the time corresponds to a time interval, wherein the time intervals are in particular regularly spaced according to a constant time step duration Δt, wherein the history window t_{history} is composed of an integer number Nₕ of time step durations Δt, wherein the number Nₕ=t_{history}/Δt is preferably smaller than 1000, or smaller than 100.

The history window t_{history} may be composed of an integer number Nₕ of time step durations Δt, which may indicate the length of the history window based on the product of the number of time steps and the duration of each time step. For example, if the history window is 24 hours and the time step duration is 10 minutes, the number of time steps Nₕ would be 144. The number Nₕ is preferably smaller than 1000, or smaller than 100, in view of a practical limit on the length of the history window to ensure computational efficiency and manageability, in particular to enable quick convergence when deployed or in view of process modifications. In some examples, the history window is not more than three or two orders of magnitude, in particular not more than one order of magnitude, larger than the prediction window up to the targeted future point in time.

In some examples, the controller machine learning model includes an autoregressive component that updates the historical data with newly measured values of the target observable and control parameters.

In general terms, an autoregressive component is a feature of a model that uses its own previous outputs as inputs to predict future values. This component may update the historical data with newly measured (or predicted) values of the target observable and control parameters. In some examples, the response of the control system is simulated based on the prediction of the oracle, and the controller machine learning model is (initially) trained based on predicted temperature values as new history values corresponding to the control parameter set in the last iteration. Autoregression may include a cumulative combination of multiple previous outputs as a new input, or utilize the combination between real data (e.g. non-controllable environmental data and/or measured system data) and predicted data (e.g. the predicted control parameter and/or a predicted value of the target observable).

In some examples, newly measured values of the target observable and recently set control parameters may be added to an active slice of past history data, and the oldest data point may be removed to provide the controller machine learning model with an updated slice of past history data on the target observable and the control parameters.

In some examples, the controller machine learning model is trained on current time-series data, a current control parameter is set based on a first control parameter of the scheduled set of control parameters to stabilize the target observable towards the setpoint during the training, and the slice of previous time-series data of the target observable and control parameters is updated based on the current control parameter and corresponding measured data indicative for the target observable at the current point in time.

The term current time-series data may include the most recent data collected from the target observable and set as control parameters. This data may be used to continuously update and train the controller machine learning model in real-time. An example of current time-series data could be the latest temperature readings and heater settings in a room temperature control system.

The term current control parameter may refer to the control parameter that is actively being adjusted based on the predictions made by the controller machine learning model. In the context of the room temperature control system, the current control parameter could be the heater current that is being set to maintain the desired room temperature.

Setting a current control parameter based on a first control parameter of the scheduled set of control parameters can involve using the initial control parameter from the scheduled set to adjust the current control parameter in real-time. For example, if the controller machine learning model predicts five different values for a control parameter scheduled for corresponding time steps up to the targeted future point in time, the current control parameter may be the first control parameter associated with an upcoming (next) point in time, or may be derived from the first control parameter, e.g. a cumulative combination of the first control parameter with previously predicted (e.g. for the same point in time) or set control parameters (e.g. including a moving average over previously set control parameters).

Updating the slice of previous time-series data based on the current control parameter and corresponding measured data indicative for the target observable at the current point in time can involve incorporating the latest control actions and their effects into the historical data used for training the model. This continuous update may allow the model to learn from recent data and improve its predictions over time, e.g. by continuously updating machine learning parameters of the controller machine learning model and/or oracle machine learning model.

In some examples, the method comprises measuring a value indicative of the target observable, and including the value and a current set of control parameters in the slice of previous time-series data for a next iteration of training the controller machine learning model.

This measured real-time data can be used in conjunction with the current control parameters to update the historical data set used in a subsequent training iteration of the machine learning model. In specific implementations, the value indicative of the target observable could be a reading from a sensor, e.g. a temperature sensor in a room where the objective is to maintain a stable temperature.

In some examples, the oracle is a machine learning model trained to predict the value of the target observable based on historical data of both controlled and uncontrolled parameters, and based on a scheduled set of control parameters for a pre-determined number of time-steps into the future.

In some examples, the controller machine learning model is trained to predict the scheduled set of control parameters for a pre-determined number of time-steps into the future up to the future point in time.

The controller machine learning model may be designed to anticipate the control parameters that will be required for a series of time-steps leading up to a specific future point. The model can be trained to output a series of control parameters that are expected to be optimal for stabilizing the target observable over a specified number of future time-steps.

The controller machine learning model may include a recurrent neural network (RNNs) or long short-term memory (LSTM) network, which may be well-suited for handling sequential data and making predictions over multiple time-steps. However, in some examples, the controller machine learning model may be a non-recurrent machine learning model, such as a non-recurrent neural network.

In some examples, the oracle is configured to predict the value of the target observable up to the targeted future point in time given the scheduled set of control parameters including control instructions to be set over a predetermined number of future time steps, in particular for an integer number n of future time steps according to a prediction time range t_{range} divided by a time step Δt, n= t_{range}/Δt, with each of the future time steps associated with a different time interval of the prediction time range t_{range} of time step duration Δt, and the controller machine learning model is configured to predict optimized control parameters over multiple points of time in the specified future horizon associated with the different time intervals, wherein n is preferably greater than two, more preferably greater than three.

The prediction time range t_{range} may refer to the duration over which the oracle makes its predictions, i.e. from a current point in time up to (e.g. including) the targeted future point in time. The division of this range into smaller time steps (Δt) can allow for granular control parameter scheduling at multiple intervals within the overall prediction horizon. For instance, if the prediction time range is one hour and the time step is ten minutes, the oracle would make a prediction based on six different data points within that hour. The configuration of the controller machine learning model may match the input of the oracle for predicting the target observable.

In some examples, the time step Δt is selected for capturing dynamics of both adjustable and non-adjustable parameters, and/or wherein the time range t_{range} is selected based on a characteristic control latency of the target observable, wherein the time step Δt is in particular selected based on Δt= t_{range}/n, wherein n is an integer number of steps, which is in particular between 2 and 20, and preferably between 3 and 10.

The time step duration, denoted as Δt, may be defined as the approximate interval between consecutive time steps in the time series data. The time range, denoted as t_{range}, refers to the duration over which the control parameters are optimized to achieve stabilization of the target observable. The time range may be selected based on a characteristic control latency of the target observable, which may be the time delay between setting a control parameter and observing its effect on the target observable, e.g. a parameter indicative of a time scale between setting a control parameter and observing its effect on a corresponding steady state of the target observable if all other parameters remain unchanged.

In most cases, an empirical estimate is available for the order of magnitude of a suitable setting of t_{range} e.g. in view of an observed control latency of the target observable and/or an observed variability of the target observable in time. A suitable configuration may subsequently be achieved by setting the time step duration based on the time range t_{range} as Δt = t_{range}/n, where n is an integer number of steps, i.e. performing a discretization of the time range into a series of time steps up to the targeted future point in time. The integer number n of steps Δt may be chosen to be between 2 and 20, and preferably between 3 and 10, such as 5, to balance the granularity of the time steps with computational efficiency. For example, if the time range is 50 minutes and n is set to 5, the time step duration would be 10 minutes, providing a suitable level of detail for the machine learning model to learn from the data. The discretization may enable the method to efficiently process time-series data while maintaining sufficient resolution to capture the dynamics of the system, with a controller machine learning model, which may be trained online and may be executed on low complexity hardware.

In some examples, the controller machine learning model is trained with a minimum number of weights, which is equal to or greater than (t_{range/}Δt )- 1 × (K + 1) × M, where K is the number of non-adjustable parameters and M is the number of adjustable parameters, t_{range} is the time until the future point in time and Δt is a time step duration indicative for a spacing in time between subsequent control commands for setting the control parameters.

The minimum number of weights may specify the least number of adjustable parameters within the machine learning model that are necessary for effective training. Here, "K" represents the number of non-adjustable parameters, e.g. environmental parameters, which are parameters that cannot be altered during the process. "M" signifies the number of adjustable parameters, which are the parameters that can be modified to influence the target observable, such as the control parameter. "t_{range}" is the time until the future point in time, indicating the duration for which predictions are made. "Δt" is a time step duration, representing the interval between subsequent control commands for setting the control parameters. It is noted that M and K may refer to the number of data points with corresponding values, i.e. including the number of data points in the previous time-series data.

In some examples, the controller machine learning model utilizes a neural network with weights optimized through backpropagation to predict an optimal scheduled set of control parameters, wherein the controller machine learning model is in particular used to implement a feedback controller and the controller machine learning model, at regular intervals in time, optimizes the weights through backpropagation and performs a forward pass to obtain a next setpoint for the control parameters to stabilize the target observable towards the setpoint.

The neural network may consist of interconnected nodes (neurons) organized in layers, where each connection has an associated weight that is adjusted during training to predict the optimal set of control parameters based on the input time-series data.

Backpropagation is a training algorithm used for neural networks, where the model's weights are adjusted to minimize the error between the predicted output and the actual target value. This process may involve calculating the gradient of the loss function with respect to each weight and updating the weights in the opposite direction of the gradient to reduce the error. The forward pass refers to the process of passing input data through the neural network to obtain the predicted output, which in this case is the next scheduled set of control parameters.

A feedback controller is a control system that adjusts its inputs based on the difference between the desired setpoint and the actual output of the system. It may continuously monitor the system's output and makes corrections to minimize the error. However, the setpoint may not be provided as an input to the controller machine learning model. Rather, the controller machine learning model may learn, through the training process to reduce the difference between the predicted scheduled set of control parameters and an expected error based on the prediction by the oracle and the setpoint. In other examples, the setpoint is provided as an input to the controller machine learning model.

A specific example of implementation could involve a neural network model used to control the temperature in a room as a target observable. The model receives time-series data on the current temperature and control parameters such as heater settings. At each regular interval, the model predicts the optimal heater settings to maintain the desired temperature as part of a forward pass of the data through the controller machine learning model. By performing a backpropagation step, the model adjusts its weights based on the difference between the predicted temperature and the actual temperature, thereby improving its predictions over time. A subsequent forward pass can provide an improved set of control parameters, based on which a current control parameter can be set to stabilize the target observable towards the setpoint. However, in alternative examples, the forward pass is used to select the next scheduled set of control parameters to minimize control delay due to computational optimization.

In some examples, the controller machine learning model, at each of the regular intervals in time, performs multiple backpropagation steps during a process of stabilizing the target observable to improve the quality of the scheduled set of control parameters.

The model may perform multiple backpropagation steps at each step during online or offline training, implying that the model undergoes several iterations of weight adjustments during the stabilization process before settling on a scheduled set of control parameters. This iterative training approach aims to refine the model's predictions and improve the accuracy of the scheduled set of control parameters at the expense of requiring increased processing resources.

In some examples, the method further comprises disabling a backpropagation process of the controller machine learning model when the machine learning model meets a prediction quality threshold, and/or predicting the scheduled set of control parameters with the controller machine learning model independently of the oracle and/or without executing the oracle.

When the model meets the prediction quality threshold the training process of the machine learning model may be halted, e.g. once it achieves a certain level of accuracy or performance. This threshold may be based on metrics such as mean squared error, accuracy, or any other relevant performance indicator. For example, in the context of room temperature control, the prediction quality threshold could be set as a maximum allowable deviation of 0.5 °C from the target temperature. The training may be reenabled, e.g. when it is determined that a stabilization quality threshold is no longer met.

When the training is disabled, the scheduled set of control parameters may be predicted with the controller machine learning model independently of the oracle and/or without executing the oracle. In general terms, the machine learning model may operate autonomously, without relying on the oracle for predictions once it has been sufficiently trained.

In some examples, the oracle is trained separately using a mean squared error loss function to minimize the difference between the predicted and actual values of the target observable.

The mean squared error (MSE) calculates the average of the squares of the errors, which are the differences between the predicted values and the actual values of the target observable. In practical terms, training the oracle separately using the MSE loss function involves feeding the oracle historical time-series data and control parameters, then adjusting the oracle's parameters (weights) to minimize the MSE. The MSE may be combined with other loss terms, or alternatively, other metrics may be used, such as the cross-entropy.

A second aspect provides a control system for setting control parameters to stabilize a target observable towards a setpoint. The control system is configured to: implement a controller machine learning model, the controller machine learning model comprising inputs for previous time-series data on the target observable and control parameters and outputs for the scheduled set of control parameters. The control system is further configured to receive, by the controller machine learning model, a slice of previous time-series data of the target observable and control parameters; and predict, by the controller machine learning model, the scheduled set of control parameters to be set prior to the targeted future point in time given the slice of previous time-series data. The control system is further configured to train the controller machine learning model, by predicting, by an oracle, the value of the target observable at a targeted future point in time given previous time-series data on the target observable and the scheduled set of control parameters to be set prior to the targeted future point in time predicted by the controller machine learning model; and updating weights of the controller machine learning model based on a cost function attributing a cost to the scheduled set of control parameters predicted by the controller machine learning model in view of the difference between the setpoint and the value of the target observable determined by the oracle. The control system is further configured to set the control parameters based on the scheduled set of control parameters to stabilize the target observable towards the setpoint.

The control system may implement the method of the first aspect or any combination of its examples.

In some examples, the control system is configured to receive current measurement data indicative for a current value of the target observable, and to train the controller machine learning model with the current value of the target observable as part of the slice of previous time-series data.

Training the controller machine learning model with the current value of the target observable as part of the slice of previous time-series data implies that the current measurement data is included in the historical data used to train the machine learning model. This training process may involve adjusting the weights of the model also based on the new data to improve its predictive accuracy.

In some examples, the system is further configured to generate a control command to set the control parameters based on the scheduled set of control parameters, wherein the scheduled set of control parameters in particular comprises control parameters for a plurality of points in time in the future, and the controller is configured to generate the control command based on a first point of the points in time in the future.

In some examples, the controller machine learning model includes an autoregressive component that updates the historical data with newly measured values of the target observable and control parameters for more accurate future predictions.

In some examples, the oracle function is an LSTM neural network trained to predict the value of the target observable based on historical data of both controlled and uncontrolled parameters.

A third aspect provides a computer program comprising machine readable instructions, which when the machine readable instructions are executed by a processing system cause the processing system to implement a method according to the first aspect and/or to implement a system according to the second aspect.

The term computer program refers to a set of instructions that can be executed by a computer to perform specific tasks. Machine readable instructions are instructions in a format that a computer's processor can understand and execute. A processing system is a combination of hardware and software that processes data.

The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

### LIST OF FIGURES

In the following, a detailed description of the present disclosure and examples thereof is given with reference to the figures. The figures show schematic illustrations of
Fig. 1: an example, of a control system according to an example of the present disclosure;
Fig. 2: a schematic flowchart of a method for setting control parameters to stabilize a target observable towards a setpoint;
Fig. 3: a schematic block diagram of a control system for setting control parameters to stabilize a target observable towards a setpoint;
Fig. 4A: a schematic timeline illustrating the configuration and stabilization of parameters over time;
Fig. 4B: a schematic flowchart comparing two different optimization paradigms for stabilizing a target observable;
Fig. 5: shows an illustrative diagram comparing the performance of different optimization methods (a) machine learning based, b) PID, and c) Nelder-Mead) in terms of temperature control over time;
Fig. 6A: a comparison between Dual Annealing optimization and no optimization in terms of temperature control over time;
Fig. 6B: a comparison between Cobyla optimization and no optimization in terms of temperature control over time;

### DESCRIPTION OF EXAMPLES

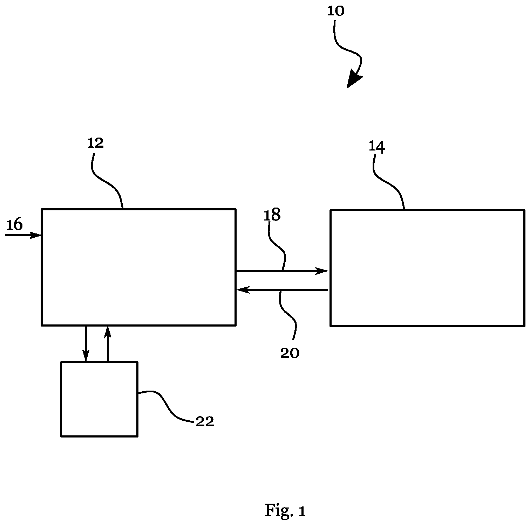

Figure 1 shows a control system 10 designed for stabilizing a target observable, e.g. in an industrial process. The control system 10 comprises a controller 12 for controlling a controlled system 14 in view of a setpoint 16 for the target observable. The controller 12 is responsible for managing the control parameters 18 that influence the controlled system 14. The controlled system 14 represents the physical or operational process that requires stabilization, such as maintaining a stable temperature or flow rate.

The controller 12 receives the setpoint 16, which is the desired value for the target observable. The setpoint 16 serves as the reference point that the controller 12 aims to achieve by adjusting the control parameters 18. The controller 12 generates the appropriate control parameters 18 based on the setpoint 16, which are then communicated to control hardware coupled to the controlled system 14. It can be assumed that the control parameters 18 are transmitted to the controlled system 14 via a connection that allows for substantially real-time adjustments of the control parameters.

The controlled system 14 provides feedback in the form of process variables 20, which are indicative of the current state of the target observable. The process variables 20 are sent to the controller 12, enabling it to assess the effectiveness of the control parameters 18 and make necessary adjustments.

A storage 22 is connected to the controller 12 and is used for storing historical data and other relevant information. The historical data includes previous values of the target observable, control parameters, and possibly other environmental parameters that may influence the controlled system 14. The storage 22 allows the controller 12 to access past data, which can be used to improve the accuracy and efficiency of the control system 10 and/or to select optimal control parameters.

The interaction between the controller 12, controlled system 14, and storage 22 forms a feedback loop that may continuously monitor and adjust the control parameters 18 to stabilize the target observable towards the setpoint 16. This feedback loop can ensure that the control system 10 can adapt to changes in the controlled system 14 and maintain the desired stability over time.

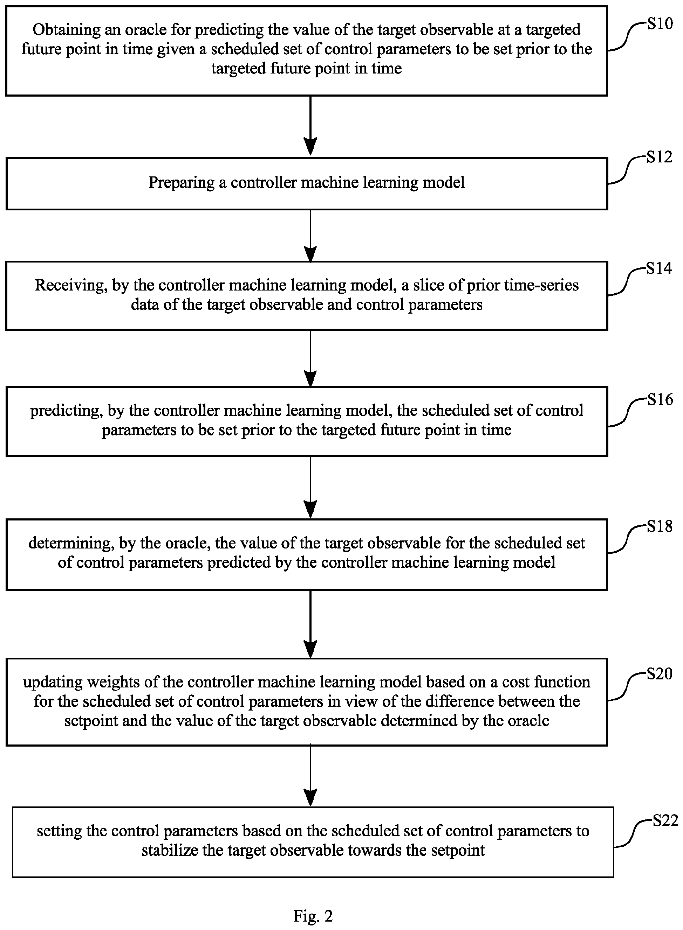

Figure 2 illustrates a flowchart detailing a computer-implemented method for setting control parameters to stabilize a target observable towards a setpoint. The process begins with step S10, which involves obtaining an oracle for predicting the value of the target observable at a targeted future point in time given previous time-series data on the target observable and the control parameters, as well as a scheduled set of control parameters to be set prior to the targeted future point in time.

The oracle may comprise an oracle machine learning model trained to predict the future value of the target observable at the targeted future point in time, when provided with the scheduled set of control parameters for the controlled system 14 and historical data on the target observable, the control parameters, and optionally environmental parameters provided as an input to the oracle. The oracle machine learning model may comprise or be a recurrent neural network, such as an LSTM network. The oracle machine learning model may be trained on historical data available for the to-be-controlled industrial process, e.g., with control parameters set according to a feedback algorithm or randomly. The training of the LSTM network can involve iteratively adjusting the network's weights to minimize the prediction error, typically using a loss function such as mean squared error (MSE).

In step S12, a controller machine learning model is prepared. The controller machine learning model includes inputs for previous time-series data on the target observable and the control parameters, and outputs for the scheduled set of control parameters.

The controller machine learning model architecture may include various layers, such as dense layers or recurrent layers, depending on the complexity of the control task and the nature of the data. The architecture may be tailored to ensure that the model can effectively capture the dynamics of the system and generate accurate control parameter schedules.

Additionally incorporating environmental parameters into the controller model can enhance its ability to adapt to external influences that affect the target observable. For example, in a climate control system, environmental parameters such as outside temperature and humidity can be included as inputs to the model.

The output of the controller machine learning model may be matched to an input of the oracle, i.e. may include a number of predicted control parameters for different points in time up to the targeted future point in time at least equal to the number of scheduled control parameters used as input for the oracle, with the scheduled set of control parameters generally spaced in time by a constant time step Δt.

In step S14 the method involves receiving, by the controller machine learning model, a slice of previous time-series data of the target observable and control parameters. This slice of data is used to inform the model about the historical behavior of the system, e.g. how past control actions and external factors have influenced the target observable, and may be provided for a limited history window, which may be an integer multiple of a constant time step Δt. The time step time step Δt by which data points are spaced may be the same for the temporal spacing of predicted control parameters in the scheduled set of control parameters and for the temporal spacing in the slice of previous time-series data.

The historical data may be structured as a table with columns for the target observable, adjustable control parameters, and non-adjustable environmental parameters. For example, in a temperature control system, the data might include room temperature (target observable), heater current (adjustable parameter), and outside temperature and humidity (non-adjustable parameters). The rows may indicate a temporal sequence of the data points in the historical data. A time window may be selected from the historical data representing a limited sequence of past data points, e.g. based on a limited number of rows from the most recent data point with respect to the current point in time, at which a prediction for optimal future control parameters should be made. In some examples, the controller machine learning model is a recurrent machine learning model and at each iteration receives new data as a current slice of previous time-series data.

In step S16, the controller machine learning model predicts the scheduled set of control parameters to be set prior to the targeted future point in time given the slice of previous time-series data.

The targeted future point in time may be temporally spaced from the current point in time by a prediction window t_{range}, indicative of a point in time, at which stabilization of the target observable towards the setpoint is desired, which may be selected based on a control latency of the controlled system/process.

Step S18 involves determining, by the oracle, the value of the target observable for the scheduled set of control parameters predicted by the controller machine learning model.

The oracle receives the scheduled set of control parameters and historical data, e.g. the most recent data points on the target observable with the further historical data retained in the memory of the oracle from a previous iteration, and therefrom predicts the value of the target observable at the future point in time given the scheduled set of control parameters. For instance, in a temperature control system, the oracle might receive the predicted heater settings (control parameters) and historical data (e.g. the most recent data point) on room temperature, outside temperature, and humidity. The oracle, trained on similar historical data, may then process this information to predict the future room temperature if the control heater settings are set in accordance with the scheduled set of control parameters.

In step S20, the weights of the controller machine learning model are updated based on a cost function. This cost function attributes a cost to the scheduled set of control parameters predicted by the controller machine learning model in view of the difference between the setpoint and the value of the target observable determined by the oracle. The updating of weights is performed to minimize this cost, thereby improving the accuracy of the model's predictions in view of the feedback by the oracle. The update may take the form of a backpropagation algorithm, e.g. by calculating a gradient of the cost function with respect to the weights and updating the weights based on the gradient to minimize the cost function. A subsequent forward pass may provide an improved scheduled set of control parameters.

In step S22, the control parameters 18 are set based on the scheduled set of control parameters to stabilize the target observable towards the setpoint 16. This step can involve implementing the control parameters 18 in the controlled system 14 to achieve the desired stabilization of the target observable.

The steps may be S14-S22 may be iteratively repeated to control the stabilization of the target observable while training the controller machine learning model. When the controller machine learning model has been trained, steps S10, S18, and S20 can be omitted.

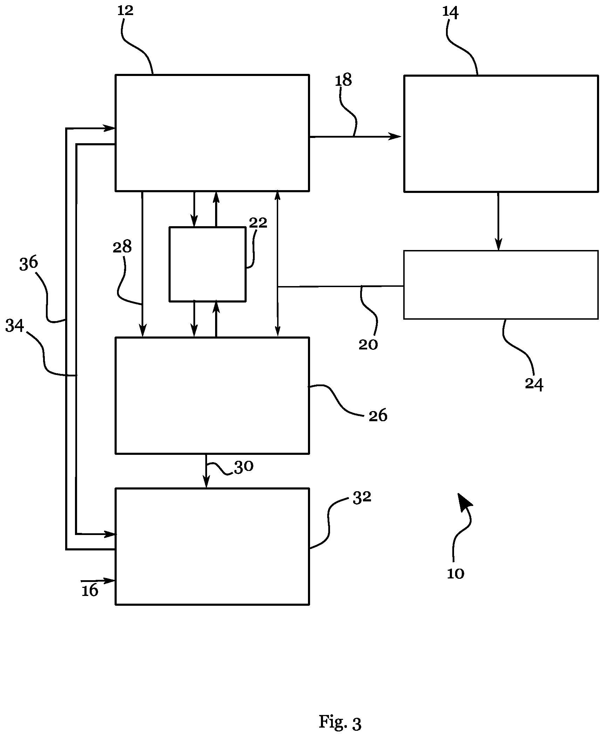

Figure 3 illustrates a control system 10 designed for stabilizing a target observable towards a setpoint 16. The system 10 comprises a controller 12, which is responsible for managing the control parameters 18 that influence the controlled system 14. The controlled system 14 is monitored by a sensor 24, which provides real-time data on process variables 20 to the controller 12 for creating a feedback loop for monitoring and controlling the controlled system 14. The controller 12 can further receive inputs from a storage module 22, which holds historical data characterizing the state of controlled system 14 and/or previous control actions.

The system 10 further comprises an oracle 26 configured to predict the value of the target observable 30 based on a scheduled set of control parameters 28 provided by the controller and historical data on the state of the controlled system. These predictions may subsequently be used by an update module 32 to refine machine learning parameters 34 (also referred to as weights) determining the action of a controller machine learning model of the controller 12.

The machine learning parameters 34 can be updated by determining a machine learning parameter update 36 by the update module 32 in view of a setpoint 16, acting as a reference point that the controller 12 aims to achieve by adjusting the control parameters 18, by comparing the predicted value of the target observable 30 with the setpoint 16. Updated machine learning parameters can be fed back into the controller 12, which may generate an improved scheduled set of control parameters 28 with the updated machine learning parameters.

In general terms, the time-dependent target observable P(t) may be considered as indicative of a current state of the controlled system 14, which at a future point in time t₁+t_{range} should to be stabilized towards the setpoint 16 based on the control parameters 18 selected at a current point in time t₁.

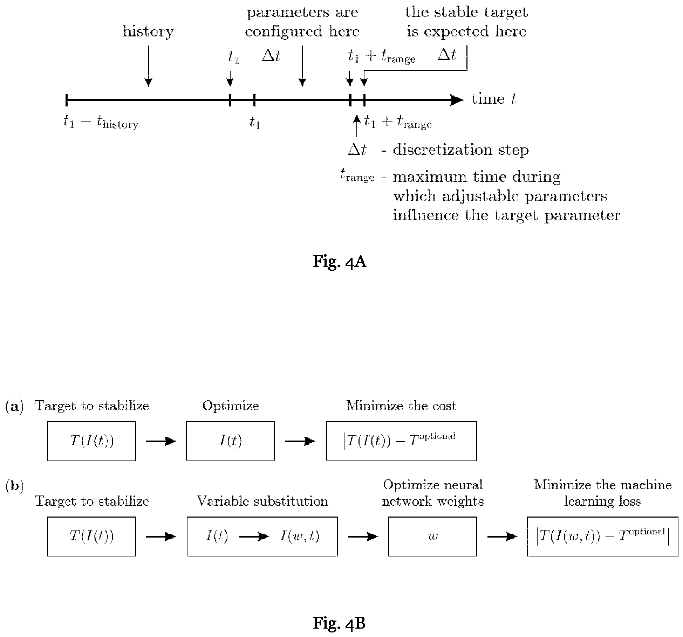

Figure 4A illustrates a timeline for the stabilization process of a target observable P(t) in an industrial process. The timeline begins at t1 - t_{history}, indicating the start of the historical data collection period or a temporal length of a slice of previous time-series data. This period extends to t1 - Δt, where the last data point of historical data is recorded. At time t1, the parameters are configured, marking the beginning of the optimization interval. The interval continues until t1 + t_{range} - Δt, during which the parameters can be set up but the target parameter may not yet be stabilized effectively due to the lack of (appropriate) control over the adjustable parameters at times up to t1 - Δt. The stable target is expected to be achieved at t1 + t_{range}. The discretization time step Δt represents the time intervals at which data points are recorded and parameters are adjusted.

In addition to history information on the target observable P(t), the control system 10 may have access to time-series data on M adjustable parameters ${\left\{{P}_{adjustable}^{i}\left(t\right)\right\}}_{i = 1}^{M}$ and K non-adjustable parameters ${\left\{{P}_{non - adjustable}^{i}\left(t\right)\right\}}_{i = 1}^{K}$. A corresponding dataset may comprise a table with M+K+1 columns of $\left\{{P}_{target}\left(t\right),{\left\{{P}_{adjustable}^{i}\left(t\right)\right\}}_{i = 1}^{M},{\left\{{P}_{non - adjustable}^{i}\left(t\right)\right\}}_{i = 1}^{K}\right\}$ and *t*1/Δ*t* rows.

The task is to set the adjustable parameters ${\left\{{P}_{adjustable}^{i}\left(t\right)\right\}}_{i = 1}^{M}$ in times with step Δt such that the target parameter *P*_{target}(*t*) is stable. However, instead of explicit optimization of ${\left\{{P}_{adjustable}^{i}\left(t\right)\right\}}_{i = 1}^{M}$, a neural network, as a controller machine learning model, is set up and optimized with weights w with the minimum number of weights *N_{w}* ≥ (*t*_{range}/Δ*t* - 1) × (*K* + 1) × *M*.

The neural network is trained by providing values of history data to the neural network as an input ${\left\{{P}_{target}\left(t\right),{\left\{{P}_{non - adjustable}^{i}\left(t\right)\right\}}_{i = 1}^{K}\right\}}_{{t}_{1} - {t}_{history}}^{{t}_{1} - Δ t}$ and predicting optimal values of adjustable parameters ${x}_{{t}_{1}} = {\left\{{\left\{{P}_{adjustable}^{i}\left(t\right)\right\}}_{i = 1}^{M}\right\}}_{{t}_{1}}^{{t}_{1} + {t}_{range} - Δ t}$ that provide a stable *P*_{target}(*t*₁ + *t*_{range}). The weights w of the neural network are updated through backpropagation of a loss function, e.g. Loss $\left({x}_{{t}_{1}}\right) = \left|{P}_{target}\left({t}_{1}+{t}_{range}\right)-{P}_{target}^{ideal}\right|$ with ${P}_{target}^{ideal}$ specifying the setpoint 16.

The weights w are changed and the adjustable parameters are predicted with updated weights w to obtain a scheduled set of control parameters 28. However, the control parameters 18 are set ${\left\{{P}_{adjustable}^{i}\left({t}_{1}\right)\right\}}_{i = 1}^{M}$ for one value *t*₁ only, i.e. for the upcoming point in time. Afterwards the neural network is used to predict adjustable values for a time shifted by Δt, *x*_{*t*1*+*Δ*t*} == ${\left\{{\left\{{P}_{adjustable}^{i}\left(t\right)\right\}}_{i = 1}^{M}\right\}}_{{t}_{1} + Δ t}^{{t}_{1} + {t}_{range}}$ based on updated information on ${P}_{target} \left(t\right) , {\left\{{P}_{adjustable}^{i}\left(t\right)\right\}}_{i = 1}^{M} , \left.{\left\{{P}_{non - adjustable}^{i}\left(t\right)\right\}}_{i = 1}^{K}\right\}$, and only the value for *t*₁ + Δ*t* is set (after an intermittent weight update).

Figure 4B presents schematic flowchart illustrating differences between a conventional optimization process flow (upper diagram(a)) and a machine learning based process flow (lower diagram (b)) for stabilizing a target parameter with an example of a room temperature T(t) stabilization. In the upper diagram (a), the process begins with the target to stabilize T(I(t), being a function of a time dependent heater current I(t) as an adjustable control parameter 18. This heater current I(t) is optimized to minimize the cost function |T(It) - Tₒₚₜᵢₘₐₗ|, where Tₒₚₜᵢₘₐₗ represents the desired target value as a setpoint 16. This approach involves direct optimization of the control parameter 18, e.g. through a PID algorithm, to achieve the desired target stabilization.

In the lower diagram (b), instead of directly optimizing the control parameter I(t), the method involves variable substitution, replacing I(t) with I(w, t), where w represents neural network weights. The neural network weights are then optimized to predict the control parameter I(w, t) that minimizes the machine learning loss function |T(I(w, t)) - Tₒₚₜᵢₘₐₗ|. This approach leverages the neural network to indirectly optimize the control parameters 18 by adjusting the weights, which may be performed based only on empirical information on a correlation between the control parameter 18 and the target observable in a past history available for constructing the oracle 26.

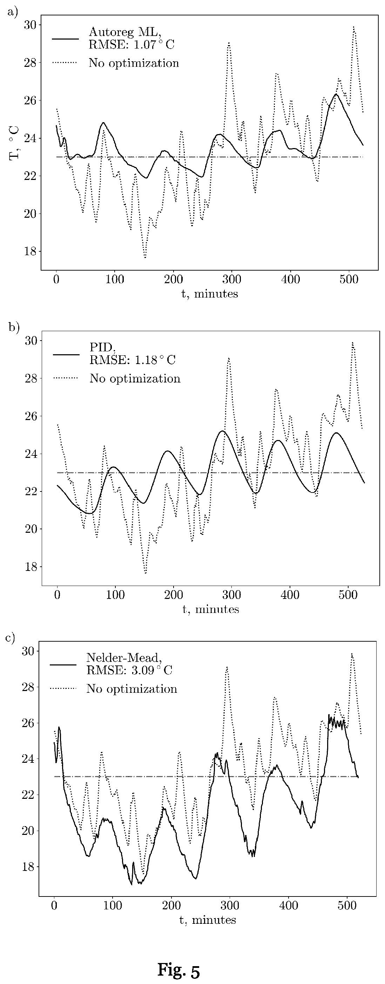

Figure 5 illustrates the comparative performance of three different optimization methods for controlling room temperature over time, as represented in three separate graphs la-beled a), b), and c). Each graph plots the temperature T in degrees Celsius on the y-axis against time t in minutes on the x-axis, showing the effectiveness of each method in maintaining the temperature close to a desired setpoint.

For the example, time is discretized in discretized time steps Δt of 10 minutes, and the dataset is constructed with *K* = 2 non-adjustable parameters {*T*ₒᵤₜ(*t*), *AH*(*t*)} (outside temperature and absolute humidity in the room), *M* = 1 adjustable parameter {*I*(*t*)} (heater current), the target value of room temperature *P*_{target}(*t*) = *T*(*t*), as the target observable, and the prediction time window is set to five discretized time steps *t*_{range} = 5Δ*t*, while prior time-series history data is considered over a history window of 24 discretized time steps t_{history} = 24Δt.

In the example, the objective of the optimization is to keep T(t) as close as possible to 23 °C by changing values of heater current *I*(*t*). The relation between {{*T*ₒᵤₜ(*t*), *AH*(*t*)}, {*I*(*t*)}} and {T(t)} is established through the Oracle function *f* according to $T \left({t}_{1}+{t}_{range}\right) = f \left({\left\{{T}_{out}\left(t\right),AH\left(t\right),I\left(t\right),T\left(t\right)\right\}}_{{t}_{1} - {t}_{history}}^{{t}_{1} - Δ t}\right) .$

This oracle function derives *T(t)* for *t* > *t*_{now} from historical data {{*T*ₒᵤₜ(*t*), *AH*(*t*)}, {*I*(*t*)}}_{*t*<*t*now}. In the experiments, the oracle 26 was implemented via training of an LSTM model on a subset of the data.

Specifically, a training slice of data (from *t*ₘᵢₙ to *t*ₜᵣₐᵢₙ) is divided into windows *X*ₜᵣₐᵢₙᵢ = ${\left\{{T}_{out}\left(t\right),AH\left(t\right),I\left(t\right),T\left(t\right)\right\}}_{{t}_{i} - {t}_{history}}^{{t}_{i} - Δ t}$ and ${y}_{{train}_{i}} = {\left\{T\left(t\right)\right\}}_{{t}_{i}}^{{t}_{i} + {t}_{range} - Δ t}$ with sizes of history and range respectively in the time dimension. Then, an LSTM model with parameters *θ* is trained through backpropagation of MSE loss between predicted temperature and *y*ₜᵣₐᵢₙᵢ: *L*(*θ*) = $\frac{{\sum }_{j}^{n} {\left(f{\left({X}_{{train}_{i}}, θ\right)}_{j}-{y}_{{train}_{{i}_{j}}}\right)}^{2}}{n} \left(n={t}_{range}/Δt=5\right)$ for 15 epochs. However, in some examples, the oracle 26 may only be trained to predict the target observable at the target future point in time, as opposed to also predicting the target observable at intermediate time steps between the current point in time (*t*₁ or *t*₁ - Δ*t*) and the targeted future point in time (*t*₁ + *t*_{range} or *t*₁ + *t*_{range} - Δ*t*). In the example implementation, the oracle function achieved a root-mean-square error for predicting the temperature of 0.42 °C.

The machine learning based controller can be trained using autoregressive inference. At moment *tᵢ* ∈ [*tₜᵣₐᵢₙ, tₘₐₓ*] a slice of previous time-series data ${\left\{{T}_{out}\left(t\right),AH\left(t\right),T\left(t\right),I\left(t\right)\right\}}_{{t}_{i} - {t}_{history}}^{{t}_{i} - Δ t}$ is used to predict a scheduled set of control parameters 28 ${\left\{I\left(t\right)\right\}}_{{t}_{i}}^{{t}_{i} + {t}_{range} - Δ t}$ with a forward pass through the controller machine learning model. Then, only *I*(*tᵢ*) is set up and used as a part of new historical data for more accurate prediction of *I*(*tᵢ* + *Δt).*

The controller machine learning model can be trained through back propagation of an mean absolute error (MAE) loss between resulting temperature value(s) predicted by the oracle 26 for the scheduled set of control parameters 28 and the desired temperature setpoint (23 °C). The algorithm may iterate over multiple steps into the future, with new values of the target observable derived from the output of the oracle 26, to create a simulated training sequence of the controller machine learning model controlling the controlled system 14 in real time.

Graph a) demonstrates the results of a corresponding autoregressive machine learning (indicated as "Autoreg ML" in the figure) method as illustrated in Fig. 2. The solid line represents the temperature trajectory achieved using the "Autoreg ML" approach, while the dashed line shows the temperature trajectory without optimization. The root mean square error RMSE for the machine learning based method is 1.07 degrees Celsius.

Graph b) depicts the results obtained using the proportional-integral-derivative PID optimization method based on the same dataset. Similar to graph a), the solid line indicates the temperature trajectory under PID control, and the dashed line shows the trajectory without optimization. The RMSE for the PID method is 1.18 degrees Celsius.

Graph c) presents the outcomes of the Nelder-Mead optimization method. The solid line represents the temperature trajectory achieved with Nelder-Mead optimization, while the dashed line shows the trajectory without optimization. The RMSE for the Nelder-Mead method is reported as 3.09 degrees Celsius. The higher RMSE value indicates a lower level of control compared to both the Autoreg ML and PID methods.

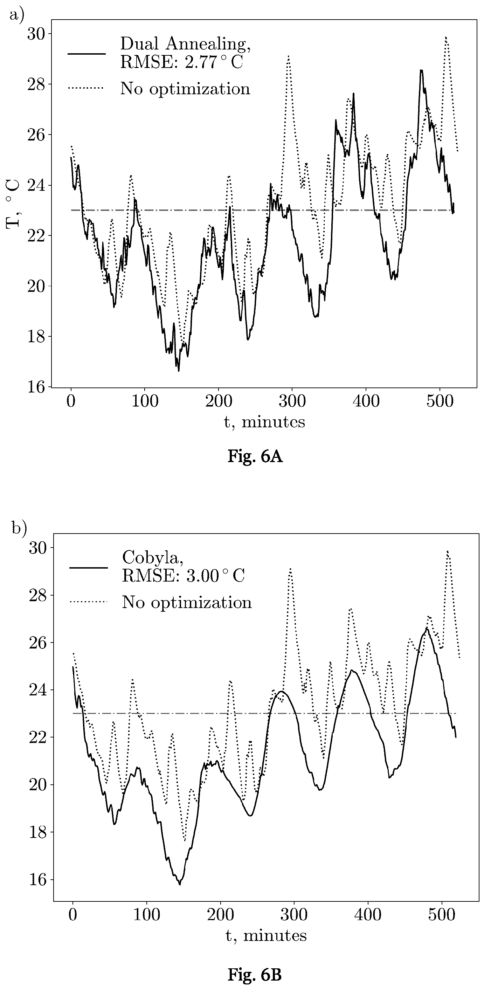

Figure 6A illustrates the performance of the Dual Annealing optimization method in controlling the temperature of the same system over the same period of time. The solid line in the graph denotes the temperature trajectory achieved using the Dual Annealing optimization method, which is evaluated to have a root mean square error RMSE of 2.77 degrees Celsius. The dashed line represents the temperature trajectory without any optimization applied.

Figure 6B presents the results of using the Cobyla optimization method for the same temperature control task over the same time period. Similar to Figure 6A, the x-axis denotes time in minutes, and the y-axis denotes temperature in degrees Celsius. The solid line in this graph represents the temperature trajectory achieved using the Cobyla optimization method, which achieves an RMSE of 3.00 degrees Celsius.

It can be seen that a controller machine learning model can achieve competitive results to state of the art optimization algorithms, at comparatively low computational cost and a comparatively low optimization time, as, after an initial training method, the controller machine learning model may require only a single forward and backward pass for control parameter selection and weight update, respectively, and may in principle be executed only in a forward pass mode, with training through backpropagation disabled at some point. The PID method achieves similar accuracy and is noted for fast inference and accurate optimization in unconstrained scenarios, but may be less applicable to complex time-series problems. Conversely, the machine learning based method can be applied to more complex time-series problems and be applied also to strictly constrained problems. Other methods, such as the Nelder-Mead method are also applicable to a broad range of problems but were found to suffer from comparatively slow inference and low accuracy when dealing with multiple local minima.

The examples of the present disclosure disclosed herein only constitute specific examples for illustration purposes. The present invention can be implemented in various ways and with many modifications without altering the underlying basic properties. Therefore, the present invention is only defined by the claims as stated below.

## Claims

1. A computer-implemented method for setting control parameters (28) to stabilize a target observable (30) towards a setpoint (16), said method comprising the steps of:
Obtaining an oracle (26) for predicting a value of the target observable (30) at a targeted future point in time given previous time-series data on the target observable (30) and the control parameters (28) and a scheduled set of control parameters (28) to be set prior to the targeted future point in time;
Preparing a controller machine learning model, the controller machine learning model comprising inputs for previous time-series data on the target observable (30) and the control parameters (28) and outputs for the scheduled set of control parameters (28);
Receiving, by the controller machine learning model, a slice of previous time-series data of the target observable (30) and control parameters (28); and
predicting, by the controller machine learning model, the scheduled set of control parameters (28) to be set prior to the targeted future point in time given the slice of previous time-series data;
Training the controller machine learning model, by
determining, by the oracle (26), the value of the target observable (30) for the scheduled set of control parameters (28) predicted by the controller machine learning model; and
updating weights (34) of the controller machine learning model based on a cost function attributing a cost to the scheduled set of control parameters (28) predicted by the controller machine learning model in view of the difference between the setpoint (16) and the value of the target observable (30) determined by the oracle (26);
setting the control parameters (28) based on the scheduled set of control parameters (28) to stabilize the target observable (30) towards the setpoint (16).

2. The method of claim 1, wherein the oracle (26) predicts the value of the target observable (30) also based on previous time-series data on a set of environmental parameters, and the time-series data on the set of environmental parameters is provided to the controller machine learning model as an additional input, the environmental parameters being uncontrolled parameters.

3. The method of claim 1 or 2, wherein the slice of previous time-series data of the target observable (30) and control parameters (28) comprises a sequence of previous data points spaced in time up to a history window t_{history} and/or
wherein the previous time-series data is divided into a plurality of points in time, wherein each of the points in the time corresponds to a time interval, wherein the time intervals are regularly spaced according to a constant time step Δt;
wherein the history window t_{history} is composed of an integer number Nₕ of time steps Δt, wherein the number Nₕ=t_{history}/Δt is preferably smaller than 1000, or smaller than 100.

4. The method of any one of the preceding claims, wherein the controller machine learning model includes an autoregressive component that updates the historical data with newly measured values of the target observable (30) and control parameters (28); and/or
wherein the controller machine learning model is trained on current time-series data, a current control parameter (18) is set based on a first control parameter of the scheduled set of control parameters (28) to stabilize the target observable (30) towards the setpoint (16) during the training, and the slice of previous time-series data of the target observable (30) and control parameters (28) is updated based on the current control parameter (18) and corresponding measured data indicative for the target observable (30) at the current point in time; and/or
wherein the method comprises measuring a value indicative of the target observable (30), and including the value and a current set of control parameters (28) in the slice of previous time-series data for a next iteration of training the controller machine learning model.

5. The method of any one of the preceding claims, wherein the oracle (26) is a machine learning model trained to predict the value of the target observable (30) based on historical data of both controlled and uncontrolled parameters, and based on a scheduled set of control parameters (28) for a pre-determined number of time-steps into the future, wherein the oracle (26) is in particular an LSTM neural network.

6. The method of any one of the preceding claims, wherein the controller machine learning model is trained to predict the scheduled set of control parameters (28) for a pre-determined number of time-steps into the future up to the future point in time.

7. The method of any one of the preceding claims, wherein the oracle (26) is configured to predict the value of the target observable (30) up to the targeted future point in time given the scheduled set of control parameters (28) including control instructions to be set over a predetermined number of future time steps, in particular for an integer number n of future time steps according to a prediction time range t_{range} divided by a time step Δt, *n*= t_{range}/Δt, with each of the future time steps associated with a different time interval of the prediction time range t_{range} of time step Δt, and the controller machine learning model is configured to predict optimized control parameters (28) over multiple points of time in the specified future horizon associated with the different time intervals, wherein n is preferably greater than two, more preferably greater than three; and/or
wherein the time step duration Δt of the time steps is selected for capturing dynamics of both adjustable and non-adjustable parameters, and/or wherein the time range t_{range} is selected based on a characteristic control latency of the target observable (30), wherein Δt is in particular selected based on Δt= t_{range}/n, wherein n is an integer number of steps, which is in particular between 2 and 20, and preferably between 3 and 10.

8. The method of any one of the preceding claims, wherein the controller machine learning model is trained with a minimum number of weights (34), which is equal to or greater than (t_{range}/Δt )- 1 × (K + 1) × M, where K is the number of non-adjustable parameters and M is the number of adjustable parameters, t_{range} is the time until the future point in time and Δt is a time step duration indicative for a spacing in time between subsequent control commands for setting the control parameters (28).

9. The method of any one of the preceding claims, wherein the controller machine learning model utilizes a neural network with weights (34) optimized through backpropagation to predict an optimal scheduled set of control parameters (28), wherein the controller machine learning model is in particular used to implement a feedback controller and the controller machine learning model, at regular intervals in time, optimizes the weights (34) through backpropagation and performs a forward pass to obtain a next setpoint for the control parameters (28) to stabilize the target observable (30) towards the setpoint (16); and/or
wherein the controller machine learning model, at each of the regular intervals in time, performs multiple backpropagation steps during a process (14) of stabilizing the target observable (30) to improve the quality of the scheduled set of control parameters (28).

10. The method of any one of the preceding claims, further comprising
disabling a backpropagation process of the controller machine learning model when the machine learning model meets a prediction quality threshold, and/or
predicting the scheduled set of control parameters (28) with the controller machine learning model independently of the oracle (26) and/or without executing the oracle (26).

11. A control (12) system for setting control parameters (28) to stabilize a target observable (30) towards a setpoint (16), the controller (12) being configured to:
Implement a controller machine learning model, the controller machine learning model comprising inputs for previous time-series data on the target observable (30) and control parameters (28) and outputs for the scheduled set of control parameters (28);
Receiving, by the controller machine learning model, a slice of previous time-series data of the target observable (30) and control parameters (28); and
predicting, by the controller machine learning model, the scheduled set of control parameters (28) to be set prior to the targeted future point in time given the slice of previous time-series data;
Train the controller machine learning model, by
Predicting, by an oracle (26), a value of the target observable (30) at a targeted future point in time given previous time-series data on the target observable (30) and the scheduled set of control parameters (28) to be set prior to the targeted future point in time predicted by the controller machine learning model; and
updating weights (34) of the controller machine learning model based on a cost function attributing a cost to the scheduled set of control parameters (28) predicted by the controller machine learning model in view of the difference between the setpoint (16) and the value of the target observable (30) determined by the oracle (26);
set the control parameters (28) based on the scheduled set of control parameters (28) to stabilize the target observable (30) towards the setpoint (16).

12. The control system of claim 11, further configured to receive current measurement data indicative for a current value of the target observable (30), and to train the controller machine learning model with the current value of the target observable (30) as part of the slice of previous time-series data.

13. The control (12) system of claim 11 or 12, further configured to generate a control command to set the control parameters (28) based on the scheduled set of control parameters (28), wherein the scheduled set of control parameters (28) in particular comprises control parameters (28) for a plurality of points in time in the future, and the controller (12) is configured to generate the control command based on a first point of the points in time in the future.

14. The control system (10) of any one of claims 11 to 13, wherein the controller machine learning model includes an autoregressive component that updates the historical data with newly measured values of the target observable (30) and control parameters (28) for more accurate future predictions; and/or
wherein the oracle function is an LSTM neural network trained to predict the value of the target observable (30) based on historical data of both controlled and uncontrolled parameters.

15. A computer program comprising machine readable instructions, which when the machine readable instructions are executed by a processing system cause the processing system to implement a method according to any one of claims 1-10 and/or to implement a system according to any one of claims 11-14.
